# FASCICULE DE BREVET EUROPEEN

(11) **EP 4 277 811 B1**
(45) Date de publication et mention de la délivrance du brevet: **28.05.2025**
(21) Numéro de dépôt: 21848277.6
(22) Date de dépôt: 14.12.2021
(51) Int. Cl.: B60R 13/02, B60R 13/08, F16B 11/00, B60R 13/06, B60R 1/00

(54) **ÉQUIPEMENT À PAROI ADAPTÉE AU COLLAGE D'UN JOINT ADHÉSIF SUR LUI-MÊME**
AUSRÜSTUNG MIT EINER WAND, DIE FÜR DAS VERKLEBEN EINER KLEBEVERBINDUNG MIT SICH SELBST GEEIGNET IST
EQUIPMENT WITH A WALL SUITABLE FOR BONDING AN ADHESIVE JOINT TO ITSELF

(30) Priorité: 14.01.2021 FR 2100356
(43) Date de publication de la demande: 22.11.2023
(73) Titulaire: Stellantis Auto SAS, 78300 Poissy (FR)
(72) Inventeur: HERMEN, Frederic, 25200 MONTBELIARD (FR)
(74) Mandataire: BCIP
(86) Numéro de dépôt international: PCT/FR2021/052320
(87) Numéro de publication internationale: WO 2022/152987

(56) Documents cités:
- US-A1- 2006 061 070
- US-B1- 6 382 350
- US-B2- 10 179 612

## Description

### Domaine technique de l'invention

La présente invention revendique la priorité de la demande française 2100356 déposée le 14 Janvier 2021.

L'invention concerne les équipements qui comprennent une paroi à laquelle est solidarisé par collage un joint adhésif.

### Etat de la technique

Dans certains domaines, comme par exemple celui des véhicules, éventuellement de type automobile, on utilise des équipements comprenant une paroi à laquelle est solidarisé par collage un joint adhésif. Parfois, la paroi comporte au moins une première partie terminale ayant des faces interne et externe, et le joint adhésif comporte au moins une seconde partie terminale ayant une face munie d'un adhésif assurant son collage sur les faces externe et interne de la première partie terminale par repliement (à environ 180°). C'est par exemple le cas d'équipements constituant des planches de bord destinées à équiper des véhicules, et dans lesquels la paroi fait partie, par exemple, d'un conduit de dégivrage. Dans cet exemple, la paroi est solidarisée à une partie avant de la planche de bord, destinée à être placée à proximité d'une partie inférieure d'un pare-brise du véhicule avec interposition du joint adhésif, lequel est alors chargé de contribuer à l'isolation phonique (ou étanchéité acoustique) de l'habitacle. Le repliement du joint adhésif sur une première partie terminale de la paroi permet alors de contribuer à cette isolation phonique à l'extrémité de cette paroi.

Le collage du joint adhésif sur la paroi de l'équipement s'effectue généralement dans l'usine où est construit ce dernier. C'est notamment le cas lorsque l'équipement est une planche de bord qui est ensuite entreposée dans son usine de fabrication, puis transportée jusqu'à un site de production industrielle d'un constructeur automobile où elle est de nouveau entreposée avant d'être acheminée sur une chaîne de montage en vue d'équiper un véhicule en construction.

Il arrive très fréquemment que la sous-partie de la (chaque) seconde partie terminale du joint adhésif, qui est initialement collée à la face interne de la première partie terminale de la paroi, se décolle complètement de cette dernière pendant un transport ou un acheminement ou un entreposage. Cela résulte du fait que le repliement à 180° d'une seconde partie terminale d'un joint adhésif induit des contraintes de traction sur sa sous-partie, initialement collée à la face interne de la première partie terminale de la paroi, que l'adhésif ne peut pas entièrement compenser sur cette face interne. Chaque fois que cette situation se produit, le technicien qui est chargé d'installer l'équipement, par exemple dans un véhicule, est contraint préalablement de recoller manuellement sur la face interne de la première partie terminale de la paroi concernée chaque sous-partie de seconde partie terminale de joint adhésif décollée, ce qui lui fait perdre du temps et donc introduit un surcoût de production. Il peut également arriver que la sous-partie décollée d'une seconde partie terminale de joint adhésif se retrouve endommagée ou repliée par auto-collage sur elle-même, ce qui l'empêche d'assurer sa fonction et donc nécessite un remplacement complet du joint adhésif, ce qui est encore plus chronophage.

L'invention a donc notamment pour but de remédier à l'inconvénient précité.

### Présentation de l'invention

Elle propose notamment à cet effet un équipement comprenant, d'une part, une paroi comportant au moins une première partie terminale ayant des faces interne et externe, et, d'autre part, un joint adhésif comportant au moins une seconde partie terminale ayant une face munie d'un adhésif assurant son collage sur les faces externe et interne de la première partie terminale par repliement.

Cet équipement se caractérise par le fait que la (chaque) première partie terminale comprend au moins un trou traversant permettant un collage local de la face de la seconde partie terminale sur elle-même.

Grâce à cet « auto-collage » de l'adhésif sur lui-même dans une zone d'un trou traversant, on augmente notablement localement l'intensité du collage de la seconde partie terminale du joint adhésif sur les faces interne et externe de la première partie terminale de la paroi, permettant ainsi de rendre pérenne ce collage.

L'équipement selon l'invention peut comporter d'autres caractéristiques qui peuvent être prises séparément ou en combinaison, et notamment :
- sa paroi peut comporter deux premières parties terminales opposées et ayant chacune des faces interne et externe, et son joint adhésif peut comporter deux secondes parties terminales opposées et ayant chacune une face munie d'un adhésif assurant son collage sur les faces externe et interne des premières parties terminales et sur elle-même via les trous traversants, par repliement ;
- il peut constituer une planche de bord destinée à équiper un véhicule ;
- en présence de la dernière option, il peut comprendre un conduit de dégivrage comportant la paroi et solidarisé à une partie avant de la planche de bord, destinée à être placée à proximité d'une partie inférieure d'un pare-brise du véhicule avec interposition du joint adhésif.

L'invention propose également un véhicule, éventuellement de type automobile, et comprenant un équipement du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, une partie d'un exemple de réalisation d'un équipement selon l'invention, constituant une planche de bord de véhicule, et
[Fig. 2] illustre schématiquement, dans une vue en coupe, une première partie terminale d'une paroi de l'équipement de la figure 1 à laquelle est collée une seconde partie terminale d'un joint adhésif.

### Description détaillée de l'invention

L'invention a notamment pour but de proposer un équipement EV comprenant une paroi PC à laquelle est solidarisé de façon pérenne, par collage, un joint adhésif JA.

Dans ce qui suit, on considère, à titre d'exemple non limitatif, que l'équipement EV est destiné à faire partie d'un véhicule de type automobile. Mais l'invention n'est pas limitée à cette application. En effet, un équipement EV selon l'invention peut être un produit ou appareil n'ayant pas nécessairement besoin de faire partie d'un objet (au sens large) ou bien peut faire partie de n'importe quel dispositif, système, appareil, véhicule (quel qu'en soit le type), installation (éventuellement industrielle) ou bâtiment.

Par ailleurs, on considère dans ce qui suit, à titre d'exemple non limitatif, que l'équipement EV est une planche de bord destinée à équiper un véhicule (ici de type automobile). Mais l'invention n'est pas limitée à ce type d'équipement EV de véhicule. Elle concerne en effet tout équipement EV pouvant équiper un véhicule et comprenant au moins une paroi à laquelle est solidarisé de façon pérenne, par collage, un joint adhésif.

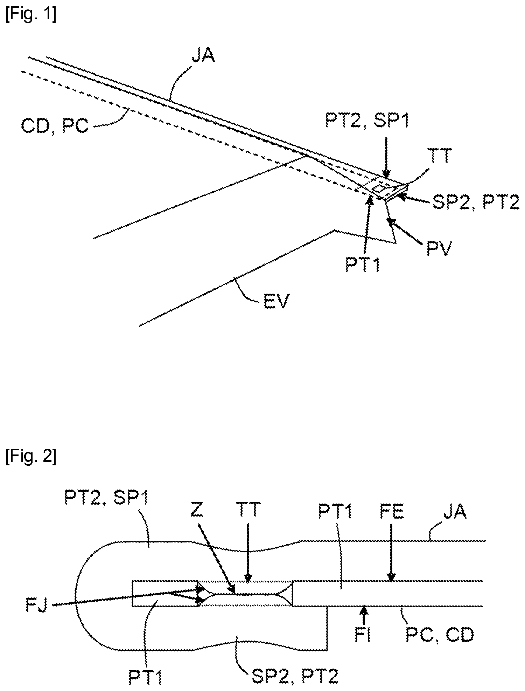

On a schématiquement illustré sur la figure 1 une partie d'un exemple de réalisation d'un équipement EV selon l'invention (ici une planche de bord), destiné à équiper un véhicule (ici automobile).

Comme illustré sur les figures 1 et 2, un équipement EV, selon l'invention, comprend au moins une paroi PC et un joint adhésif JA.

La paroi PC comprend au moins une première partie terminale PT1 ayant des faces interne FI et externe FE opposées.

Le joint adhésif JA comprend au moins une seconde partie terminale PT2 ayant une face FJ munie d'un adhésif assurant son collage sur les faces externe FE et interne FI de la (d'une) première partie terminale PT1 par repliement (ici sensiblement à 180°). En d'autres termes, la (chaque) seconde partie terminale PT2 du joint adhésif JA comprend une première sous-partie SP1 collée sur la face externe FE de la (d'une) première partie terminale PT1 de la paroi PC, et une seconde sous-partie SP2 collée sur la face interne FI de cette première partie terminale PT1.

De plus, la (chaque) première partie terminale PT1 comprend au moins un trou traversant TT qui permet un collage local Z de la face FJ de la seconde partie terminale PT2 sur elle-même.

L'adhésif étant désormais collé à lui-même dans une zone Z d'un trou traversant TT, cela augmente notablement localement l'intensité du collage tout en limitant, voire annulant, les contraintes de traction sur sa seconde sous-partie SP2. En effet, cet « auto-collage » dans la zone Z permet d'induire des contraintes de traction de sens opposés sur les première SP1 et seconde SP2 sous-parties, et ainsi d'obtenir un quasi-équilibre favorisant le collage du reste de la première sous-partie SP1 sur la face externe FE de la première partie terminale PT1 et du reste de la seconde sous-partie SP2 sur la face interne FI de cette première partie terminale PT1. Il n'y a donc plus de risque de décollage complet de la seconde sous-partie SP2 de la (chaque) seconde partie terminale PT2 du joint adhésif JA, ce qui, dans le cas notamment d'un équipement EV de véhicule, évite au technicien de perdre du temps sur la chaine de montage et donc un surcoût de production. En outre, il n'y a plus de risque d'endommagement ou de repliement de la seconde sous-partie SP2 de la (chaque) seconde partie terminale PT2 du joint adhésif JA par auto-collage sur elle-même, ce qui permet à ce dernier (JA) d'assurer sa fonction.

On notera, bien que cela n'apparaisse pas sur les figures 1 et 2, que la paroi PC peut comporter deux premières parties terminales PT1 opposées et ayant chacune des faces interne FI et externe FE, et dans le même temps le joint adhésif JA peut comporter deux secondes parties terminales PT2 opposées et ayant chacune une face FJ munie d'un adhésif assurant son collage sur les faces externe FE et interne FI des premières parties terminales PT1 et sur elle-même via les trous traversants TT, par repliement. Mais la paroi PC d'un équipement EV peut ne comporter qu'une première partie terminale PT1, et dans ce cas le joint adhésif JA n'a besoin de comporter qu'une seconde partie terminale PT2.

On notera également que dans l'exemple illustré non limitativement sur la figure 1, et dans lequel l'équipement EV constitue une planche de bord, la paroi PC peut faire partie d'un conduit de dégivrage CD solidarisé à une partie avant PV de la planche de bord EV qui est destinée à être placée à proximité de la partie inférieure d'un pare-brise du véhicule avec interposition du joint adhésif JA. Dans cette application le joint adhésif JA est chargé de contribuer à l'isolation phonique (ou étanchéité acoustique) de l'habitacle du véhicule, et le collage pérenne des première SP1 et seconde SP2 sous-parties de sa (ses) seconde(s) partie(s) terminale(s) PT2 garantie qu'il assurera sa fonction à l'extrémité (chaque extrémité) de la paroi PC.

## Revendications

1. Equipement (EV) comprenant une paroi (PC), comportant au moins une première partie terminale (PT1) ayant des faces interne (FI) et externe (FE), et un joint adhésif (JA), comportant au moins une seconde partie terminale (PT2) ayant une face (FJ) munie d'un adhésif assurant son collage sur lesdites faces externe (FE) et interne (FI) de ladite première partie terminale (PT1) par repliement, **caractérisé en ce que** ladite première partie terminale (PT1) comprend au moins un trou traversant (TT) permettant un collage local de ladite face (FJ) de la seconde partie terminale (PT2) sur elle-même.

2. Equipement selon la revendication 1, **caractérisé en ce que** ladite paroi (PC) comporte deux premières parties terminales (PT1) opposées et ayant chacune des faces interne (FI) et externe (FE), et **en ce que** ledit joint adhésif (JA) comporte deux secondes parties terminales (PT2) opposées et ayant chacune une face (FJ) munie d'un adhésif assurant son collage sur lesdites faces externe (FE) et interne (FI) desdites premières parties terminales (PT1) et sur elle-même via lesdits trous traversants (TT), par repliement.

3. Equipement selon la revendication 1 ou 2, **caractérisé en ce qu'**il constitue une planche de bord destinée à équiper un véhicule.

4. Equipement selon la revendication 3, **caractérisé en ce qu'**il comprend un conduit de dégivrage (CD) comportant ladite paroi (PC) et solidarisé à une partie avant (PV) de ladite planche de bord, destinée à être placée à proximité d'une partie inférieure d'un pare-brise dudit véhicule avec interposition dudit joint adhésif (JA).

5. Véhicule, **caractérisé en ce qu'**il comprend un équipement (EV) selon l'une des revendications précédentes.

6. Véhicule selon la revendication 5, **caractérisé en ce qu'**il est de type automobile.

## Patentansprüche

1. Ausrüstung (EV), umfassend eine Wand (PC), die mindestens einen ersten Endabschnitt (PT1) mit inneren (FI) und äußeren (FE) Flächen und eine Klebeverbindung (JA) aufweist, die mindestens einen zweiten Endabschnitt (PT2) mit einer Fläche (FJ) aufweist, die mit einem Kleber versehen ist, der durch Falten an den äußeren (FE) und inneren (FI) Flächen des ersten Endabschnitts (PT1) haftet, **dadurch gekennzeichnet, dass** der erste Endabschnitt (PT1) mindestens ein Durchgangsloch (TT) aufweist, das ein lokales Kleben der Fläche (FJ) des zweiten Endabschnitts (PT2) ermöglicht An sich selbst.

2. Vorrichtung nach Anspruch 1, **dadurch gekennzeichnet, dass** die Wand (PC) zwei gegenüberliegende erste Endabschnitte (PT1) aufweist, die jeweils innere (FI) und äußere (FE) Flächen aufweisen, und dass die Klebeverbindung (JA) zwei gegenüberliegende zweite Endabschnitte (PT2) aufweist, von denen jeder eine Fläche (FJ) aufweist, die mit einem Kleber versehen ist, der seine Verklebung mit den äußeren (FE) und inneren (FI) Flächen der ersten Endabschnitte (PT1) und auf sich selbst über die Durchgangslöcher (TT) durch Falten sicherstellt.

3. Ausrüstung nach Anspruch 1 oder 2, **dadurch gekennzeichnet, dass** sie ein Armaturenbrett zur Ausrüstung eines Fahrzeugs bildet.

4. Vorrichtung nach Anspruch 3, **dadurch gekennzeichnet, dass** sie eine Abtauleitung (CD) aufweist, die die Wand (PC) aufweist und mit einem vorderen Teil (PV) des Armaturenbretts fest verbunden ist, der dazu bestimmt ist, in der Nähe eines unteren Teils einer Windschutzscheibe des Fahrzeugs angeordnet zu werden, wobei die Klebeverbindung (JA) dazwischen angeordnet ist.

5. Fahrzeug, **dadurch gekennzeichnet, dass** es eine Ausrüstung (EV) nach einem der vorhergehenden Ansprüche umfasst.

6. Fahrzeug nach Anspruch 5, **dadurch gekennzeichnet, dass** es ein Kraftfahrzeug ist.

## Claims

1. Equipment (EV) comprising a wall (PC), comprising at least a first terminal part (PT1) having internal (FI) and external (FE) faces, and an adhesive joint (JA), comprising at least a second terminal part (PT2) having a face (FJ) provided with an adhesive ensuring its glueing to said external (FE) and internal (FI) faces of said first terminal part (PT1) by folding, **characterised in that** said first terminal part (PT1) comprises at least one through hole (TT) allowing local glueing of said face (FJ) of the second terminal part (PT2) to said face herself.

2. Equipment according to Claim 1, **characterised in that** the said wall (PC) comprises two first opposite end parts (PT1) and each having an inner face (FI) and an outer face (FE), and **in that** the said adhesive joint (JA) comprises two second opposite end parts (PT2) and each having a face (FJ) provided with an adhesive ensuring that it is bonded to the said outer face (FE) and inner face (FI) of the said first end parts (PT1) and to itself via the said through-holes (TT), by folding.

3. Equipment according to Claim 1 or 2, **characterised in that** it constitutes a dashboard intended to equip a vehicle.

4. Equipment according to Claim 3, **characterised in that** it comprises a defrosting conduit (CD) comprising the said wall (PC) and secured to a front part (PV) of the said dashboard, intended to be placed at the local of a lower part of a windscreen of the said vehicle with the interposition of the said adhesive seal (JA).

5. Vehicle, comprising equipment (EV) according to one of the previous claims.

6. Vehicle according to Claim 5, **characterised in that** it is of the motor vehicle type.
